# EUROPÄISCHE PATENTSCHRIFT

(11) **EP 3 776 028 B1**
(45) Veröffentlichungstag und Bekanntmachung des Hinweises auf die Patenterteilung: **22.10.2025**
(21) Anmeldenummer: 18716183.1
(22) Anmeldetag: 29.03.2018
(51) Int. Cl.: G02B 6/02, G02B 6/293, G02B 6/42

(54) **VORRICHTUNG UND VERFAHREN ZUM ÜBERTRAGEN VON LICHT ZWISCHEN ZUMINDEST EINEM OPTOELEKTRONISCHEN BAUELEMENT UND ZUMINDEST EINEM LICHTWELLENLEITER**
DEVICE AND METHOD FOR TRANSFERRING LIGHT BETWEEN AT LEAST ONE OPTOELECTRONIC COMPONENT AND AT LEAST ONE OPTICAL WAVEGUIDE
DISPOSITIF ET PROCÉDÉ DE TRANSMISSION DE LUMIÈRE ENTRE AU MOINS UN COMPOSANT OPTOÉLECTRONIQUE ET AU MOINS UN GUIDE D'ONDES OPTIQUES

(43) Veröffentlichungstag der Anmeldung: 17.02.2021
(73) Patentinhaber: Fraunhofer-Gesellschaft zur Förderung der angewandten Forschung e.V., 80686 München (DE)
(72) Erfinder: SCHADE, Wolfgang, 38644 Goslar (DE); ANGELMAHR, Martin, 38644 Goslar (DE)
(86) Internationale Anmeldenummer: PCT/EP2018/058213
(87) Internationale Veröffentlichungsnummer: WO 2019/185156

(56) Entgegenhaltungen:
- WO-A1-00/79319
- WO-A1-01/94896
- WO-A1-2017/081316
- US-A- 5 633 748
- US-A- 6 002 822
- US-A1- 2005 185 885
- US-B1- 6 211 957
- HOI ET AL: "Spectra profile expansion of Bragg wavelength on nano-particle embedded fiber-Bragg-grating", SENSORS AND ACTUATORS A: PHYSICAL, ELSEVIER BV, NL, vol. 141, no. 2, 22 October 2007 (2007-10-22), pages 334 - 338, XP022452373, ISSN: 0924-4247, DOI: 10.1016/J.SNA.2007.10.034

## Beschreibung

Die Erfindung betrifft ein Verfahren zum Übertragen von Licht zwischen zumindest einem optoelektronischen Bauelement und zumindest einem Lichtwellenleiter. Weiterhin betrifft die Erfindung eine Vorrichtung mit zumindest einem optoelektronischen Bauelement und zumindest einem Lichtwellenleiter, welche dazu eingerichtet sind, Licht zwischen dem optoelektronischen Bauelement und dem Lichtwellenleiter zu übertragen. Vorrichtungen und Verfahren dieser Art können beispielsweise dazu verwendet werden, optische Datensignale in einen Lichtwellenleiter zu senden oder diese aus dem Lichtwellenleiter zu empfangen. Weiterhin können die genannten Vorrichtungen und Verfahren dazu eingesetzt werden, faseroptische Sensoren auszulesen.

Aus der US 5,633,748 A sind Lichtwellenleiter bekannt, welche einen Kern und einen den Kern konzentrisch umgebenden Mantel aufweisen. Kern und Mantel weisen unterschiedliche Brechungsindices auf, sodass optische Signale, welche dem Kern zugeführt werden, im Kern durch Totalreflexion propagieren. Um die optischen Signale dem Kern zuzuführen, wird eine Lichtquelle, beispielsweise eine Leuchtdiode oder ein Halbleiterlaser, relativ zum Lichtwellenleiter so angeordnet, dass der Strahl der Lichtquelle über die Stirnseite des Lichtwellenleiters in den Kern eintreten kann. Ein optischer Empfänger, beispielsweise eine Photodiode, wird am gegenüberliegenden Ende des Lichtwellenleiters ebenfalls in Verlängerung der Längsausdehnung angeordnet, sodass das über die Stirnseite aus dem Lichtwellenleiter austretende Licht auf den optischen Empfänger fällt.

Diese bekannte Vorrichtung weist den Nachteil auf, dass stets nur ein einzelner Empfänger bzw. eine einzelne Lichtquelle in Verlängerung des Lichtwellenleiters gegenüber von dessen Stirnseite angeordnet werden kann. Sofern verschiedene Wellenleiter bzw. Empfänger verwendet werden müssen, beispielsweise zur Datenübertragung im Wellenlängenmultiplexverfahren, müssen zwischen den Sendern bzw. Empfängern und dem Lichtwellenleiter aufwendige Spektrometer angeordnet werden. Durch den hiermit verbundenen apparativen Aufwand sinkt die Betriebssicherheit bei gleichzeitig steigenden Kosten.

Die US 6,002,822 A offenbart einen dispersiven optischen Wellenleiterabgriff. Dieser umfasst ein Bragggitter im Kern des Wellenleiters, Kopplungsmittel und einen Detektor. Das Gitter ist so ausgewählt, dass geführtes Modenlicht einer vorbestimmten Wellenlänge in eine oder mehrere Mantelmoden des Wellenleiters geleitet wird. Das Kopplungsmittel im Zusammenwirken mit dem Wellenleiter ändert die Führungsbedingungen so, dass die Mantelmoden im Wesentlichen aus dem Abschnitt des Wellenleiters eliminiert und auf den Detektor gelenkt werden.

Aus der WO 01/94896 A1 ist eine optische Faser mit einem Bragg-Gitter sowie ein seitlich der Faser angeordnetes Detektorelement bekannt. Das Bragg-Gitter ist dazu eingerichtet, zumindest einen Teil des Lichtes aus der Faser auszukoppeln und dieses dem Detektor zuzuführen.

Die US 2005/1855885 A1 zeigt einen Add-Drop-Multiplexer, bei welchem einzelne Kanäle eines optischen Signals durch ein Faser-Bragg-Gitter gefiltert und durch ein neu kodiertes optisches Signal identischer Wellenlänge ersetzt werden.

Aus der WO 00/79319 A1 ist ein Diffusor am Ende einer optischen Faser bekannt. Dieser Diffusor soll die Aufgabe haben, Licht möglichst homogen entlang seiner Längserstreckung und entlang der Umfangsrichtung abzustrahlen.

Der Erfindung liegt somit die Aufgabe zugrunde, Vorrichtungen und Verfahren zur Datenübertragung bzw. zur Signalauslese bereitzustellen, welche einen geringeren apparativen Aufwand erfordern.

Die Aufgabe wird erfindungsgemäß durch eine Vorrichtung gemäß Anspruch 1 und ein Verfahren nach Anspruch 10 gelöst. Vorteilhafte Weiterbildungen der Erfindung finden sich in den Unteransprüchen.

Erfindungsgemäß wird eine Vorrichtung mit zumindest einem optoelektronischen Bauelement und zumindest einem Lichtwellenleiter vorgeschlagen. Das optoelektronische Bauelement kann beispielsweise eine LED oder einen Halbleiterlaser enthalten oder daraus bestehen. Insbesondere kann das optoelektronische Bauelement ein Leuchtdiodenarray bzw. ein Laserdiodenarray sein. In einigen Ausführungsformen der Erfindung kann das optoelektronische Bauelement dazu eingerichtet sein, Licht unterschiedlicher Wellenlängen zu emittieren, entweder in Form einer Mehrzahl diskreter Wellenlängen oder in Form einer vergleichsweise breiten spektralen Verteilung. Eine Mehrzahl diskreter Wellenlängen kann durch einzelne Teilelemente eines Leuchtdiodenarrays bzw. ein Laserdiodenarrays emittiert werden.

In anderen Ausführungsformen der Erfindung kann das optoelektronische Bauelement dazu eingerichtet sein, elektromagnetische Strahlung in korrespondierende elektrische Signale zu wandeln. Hierzu kann das optoelektronische Bauelement eine Photodiode bzw. ein Photodiodenarray oder ein CCD-Sensor sein bzw. einen solchen enthalten. Ein CCD-Sensor kann als Zeilensensor eine Mehrzahl von Pixeln aufweisen und hierdurch nicht nur Lichtintensität erfassen, sondern auch den jeweiligen Ort. Zusammenfassend ist das optoelektronische Bauelement dazu eingerichtet, elektrische Signale in optische Signale oder optische Signale in elektrische Signale zu wandeln.

Der Lichtwellenleiter enthält zumindest einen Kern, welcher einen polygonalen oder runden Querschnitt aufweisen kann. Der Kern ist von einem konzentrischen Mantel umgeben, welcher einen kleineren Brechungsindex aufweist als der Kern. Daher tritt an der Grenzfläche zwischen Kern und Mantel Totalreflexion auf, sodass optische Signale, welche in den Kern eingekoppelt werden, innerhalb des Kerns entlang der Längsausdehnung des Lichtwellenleiters propagieren.

Das optoelektronische Bauelement wirkt so mit dem Lichtwellenleiter zusammen, dass Licht aus dem Lichtwellenleiter in das optoelektronische Bauelement eingekoppelt werden kann oder Licht aus dem optoelektronischen Bauelement in den Lichtwellenleiter bzw. in dessen Kern eingekoppelt werden kann. Erfindungsgemäß wird hierzu zumindest ein Bragg-Gitter in den Lichtwellenleiter einzubringen, welches eine entlang seiner Längsausdehnung variable Gitterkonstante aufweist. In einigen Ausführungsformen der Erfindung kann das Bragg-Gitter im Kern des Lichtwellenleiters angeordnet sein. In anderen Ausführungsformen der Erfindung kann das Bragg-Gitter im Mantel des Lichtwellenleiters angeordnet sein. In wiederum einer anderen Ausführungsform der Erfindung kann das Bragg-Gitter sowohl im Kern als auch im Mantel angeordnet sein.

Das Bragg-Gitter enthält eine Mehrzahl von Raumbereichen, welche einen gegenüber dem umgebenden Material verschiedenen Brechungsindex aufweisen. Diese Raumbereiche sind entlang der Längsausdehnung des Lichtwellenleiters beabstandet in diesen eingebracht, wobei der Abstand benachbarter Raumbereiche die Gitterkonstante angibt. Erfindungsgemäß variiert diese Gitterkonstante entlang der Längsausdehnung des Bragg-Gitters.

Weiterhin wird vorgeschlagen, dass das optoelektronische Bauelement seitlich beabstandet vom Lichtwellenleiter angeordnet ist. Unter seitlich beabstandet wird im Sinne der vorliegenden Beschreibung ein Ort neben dem Lichtwellenleiter bezeichnet, welcher außerhalb des Akzeptanzkegels des Kernes liegt, welcher sich von der Stirnfläche ausgehend an den Lichtwellenleiter anschließt.

Erfindungsgemäß wurde erkannt, dass Licht, welches am Bragg-Gitter gebeugt und gestreut wird, seitlich aus dem Lichtwellenleiter austritt und so auch dann das optoelektronische Bauelement erreichen kann, wenn dieses außerhalb des sich in Verlängerung des Kernes befindlichen Akzeptanzbereiches des Lichtwellenleiters befindet. Aufgrund der veränderlichen Gitterkonstante wird Licht unterschiedlicher Wellenlängen unter unterschiedlichen Winkeln gebeugt bzw. gestreut, sodass unterschiedliche Wellenlängen zu unterschiedlichen optoelektronischen Bauelementen oder in unterschiedliche Teilflächen eines einzigen optoelektronischen Bauelementes gelangen kann. Da Lichtpfade grundsätzlich umkehrbar sind, kann die erfindungsgemäße Vorrichtung sowohl zur Ankopplung eines Senders als auch zur Ankopplung eines Empfängers dienen, d.h. das Licht kann sowohl vom Lichtwellenleiter zum optoelektronischen Bauelement geführt werden als auch vom optoelektronischen Bauelement zum Lichtwellenleiter. "Licht" im Sinne der vorliegenden Beschreibung bezeichnet dabei elektromagnetische Strahlung, beispielsweise mit einer Wellenlänge von etwa 2 µm bis etwa 200 nm oder von etwa 1,5 µm bis etwa 0,5 µm. Die Erfindung ist nicht auf sichtbares Licht beschränkt.

Erfindungsgemäß sind zumindest im ersten Längsabschnitt weiterhin Streuzentren angeordnet. Die Streuzentren können die Wirkung haben, dass Licht, welches am Bragg-Gitter interferiert, zu einem größeren Teil in Richtung des optoelektronischen Bauelementes gestreut wird als ohne solche Streuzentren. Hierdurch kann das Signal-/Rauschverhältnis verbessert sein.

In einigen Ausführungsformen der Erfindung kann die Dichte der Streuzentren mit der Gitterkonstanten des Bragg-Gitters moduliert sein, so dass sich Volumenbereiche mit hoher Dichte mit Volumenbereichen geringerer Dichte abwechseln und der sich der Abstand benachbarter Volumenbereiche innerhalb der Längserstreckung des Bragg-Gitters verändert. Eine solche Veränderung kann gleichlaufend mit der Gitterkonstanten des Bragg-Gitters sein.

In einigen Ausführungsformen der Erfindung können die Streuzentren durch lokale Modifikation des Materials des Lichtwellenleiters gebildet werden. Eine solche lokale Modifikation kann beispielsweise durch Bestrahlung mit einem Kurzpulslaser erfolgen. In anderen Ausführungsformen der Erfindung kann die Materialmodifikation durch Belichtung mit einer Maske erfolgen.

In einigen Ausführungsformen der Erfindung können die Streuzentren durch eingebettete Nanopartikel gebildet werden. Die Nanopartikel können in einigen Ausführungsformen der Erfindung ein Oxid oder ein Nitrid enthalten oder daraus bestehen. In einigen Ausführungsformen der Erfindung können die Nanopartikel TiO₂ enthalten oder daraus bestehen. Solche Nanopartikel können bei der Herstellung des Lichtwellenleiters in den Rohling bzw. in die Schmelze eingebracht werden, aus welcher der Lichtwellenleiter gefertigt wird.

In einigen Ausführungsformen der Erfindung können die Streuzentren einen Durchmesser von etwa 10 nm bis etwa 100 nm aufweisen. In anderen Ausführungsformen der Erfindung können die Streuzentren einen Durchmesser von etwa 30 nm bis etwa 90 nm aufweisen. In wiederum anderen Ausführungsformen der Erfindung können die Streuzentren einen Durchmesser von etwa 40 nm bis etwa 80 nm aufweisen. Solche Streuzentren sind in der Regel kleiner als die Wellenlänge der im Lichtwellenleiter propagierenden optischen Signale. Hierdurch werden Beugungseffekte an den Streuzentren vermieden.

Erfindungsgemäß weisen die Streuzentren eine Konzentration von etwa 0,1 % bis etwa 5 % des mit den Streuzentren versehenen Volumens bzw. Teilvolumens auf. In einigen Ausführungsformen der Erfindung können die Streuzentren eine Konzentration von etwa 0,5 % bis etwa 3 % oder von etwa 0,8 % bis etwa 2,5 % des mit den Streuzentren versehenen Volumens bzw. Teilvolumens aufweisen. Hierdurch wird einerseits eine hinreichende Intensität im optoelektronischen Bauelement sichergestellt und andererseits vermieden, dass die im Lichtwellenleiter propagierenden Signale so stark gestreut werden, dass die optischen Verluste eine weitere Nutzung der Signale unmöglich machen.

In einigen Ausführungsformen der Erfindung kann die Gitterkonstante entlang der Längsausdehnung des Bragg-Gitters so verändert sein, dass Licht einer vorgebbaren Wellenlänge λₙ an einem ersten Ort mit einer ersten Gitterkonstante Λ₁ des Bragg-Gitters unter einem Winkel αₙ gestreut wird und an einem zweiten Ort mit einer zweiten Gitterkonstante Λ₂ des Bragg-Gitters unter einem Winkel αₙ' gestreut wird, sodass in einer Ebene parallel zum Lichtwellenleiter im Abstand d das Licht der Wellenlänge λₙ fokussiert abgebildet wird. Eine solche Ausführungsform der Erfindung berücksichtigt, dass aus Sicht einer bestimmten Teilfläche eines optoelektronischen Bauelementes unterschiedliche Orte des Bragg-Gitters unter unterschiedlichen Winkeln erreicht werden. Durch Anpassung des Beugungswinkels an diese Sichtachsen wird ermöglicht, Licht einer Wellenlänge stets auf den gleichen Ort bzw. Flächenbereich des optoelektronischen Bauelementes abzubilden. Andere Wellenlängen werden dementsprechend auf anderen Teilflächen des optoelektronischen Bauelementes abgebildet, sodass die erfindungsgemäße Vorrichtung als lichtwellenleiterintegrierter Demultiplexer arbeitet. Da Lichtpfade grundsätzlich umkehrbar sind, kann die erfindungsgemäße Vorrichtung auch als Multiplexer eingesetzt werden, welcher Licht unterschiedlicher Wellenlänge unter unterschiedlichen Winkeln auf das Bragg-Gitter lenkt, welches dann am Bragg-Gitter so gebeugt wird, dass dieses unabhängig von der Wellenlänge im Kern des Lichtwellenleiters propagieren kann.

In einigen Ausführungsformen der Erfindung kann der Lichtwellenleiter weiterhin eine Mehrzahl von Faser-Bragg-Gittern enthalten, welche dazu eingerichtet sind, mechanische Spannungen, Längenänderungen und/oder Temperatur zu erfassen. Hierzu werden Faser-Bragg-Gitter an vorgebbaren Stellen des Lichtwellenleiters eingebracht, beispielsweise durch Punkt-zu-Punkt-Belichten mit einem Kurzpulslaser oder durch Maskenbelichtung. Unterschiedliche Faser-Bragg-Gitter an unterschiedlichen Orten des Lichtwellenleiters können eine unterschiedliche Gitterkonstante aufweisen, sodass unterschiedliche Messorte durch Wellenlängenmultiplex unterschieden werden können. Bei Einwirken einer mechanischen Spannung oder einer Temperaturschwankung ändert sich die Längsausdehnung des Lichtwellenleiters durch Dehnung oder Stauchung, welche über die Änderung der Gitterkonstante der Faser-Bragg-Gitter und damit über die Änderung der Bragg-Wellenlänge detektiert werden kann.

Nachfolgend soll die Erfindung anhand von Figuren ohne Beschränkung des allgemeinen Erfindungsgedankens näher erläutert werden. Dabei zeigt
Figur 1 das Zusammenwirken eines optoelektronischen Bauelementes und eines Lichtwellenleiters gemäß dem Stand der Technik.
Figur 2 zeigt das Zusammenwirken eines optoelektronischen Bauelementes und eines Lichtwellenleiters gemäß der vorliegenden Erfindung.
Figur 3 zeigt einen Ausschnitt aus einem Lichtwellenleiter gemäß der vorliegenden Erfindung.
Figur 4 zeigt das Zusammenwirken eines einzelnen optoelektronischen Bauelementes mit einer Mehrzahl von Lichtwellenleitern.

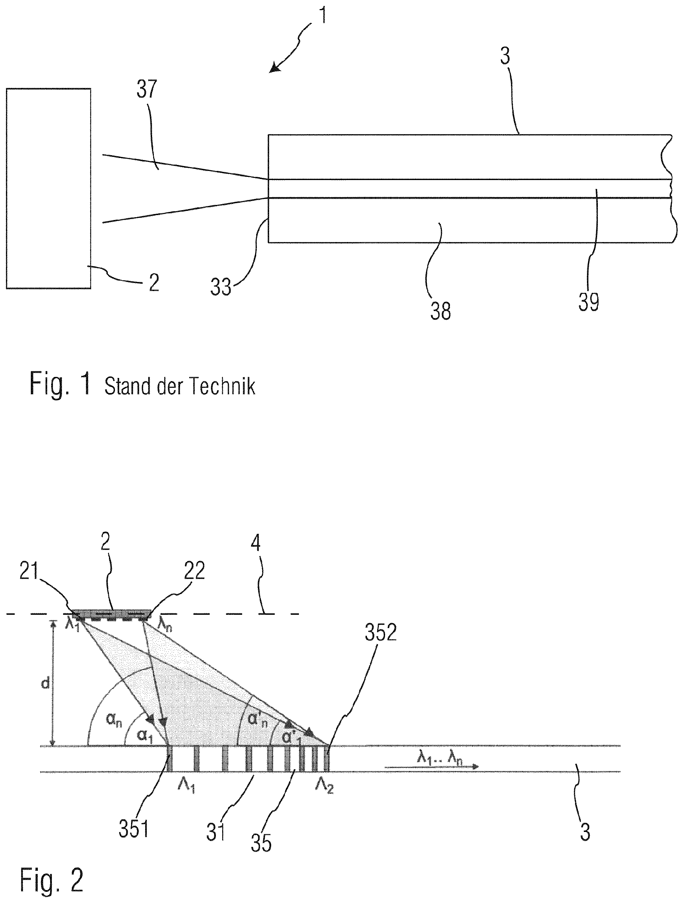

Anhand von Figur 1 wird das Zusammenwirken eines optoelektronischen Bauelementes 2 mit einem Lichtwellenleiter 3 gemäß dem Stand der Technik beschrieben.

Der Lichtwellenleiter 3 enthält einen Kern 39 und einen den Kern konzentrisch umgebenden Mantel 38. In anderen Ausführungsformen der Erfindung können auch mehrere Kerne 39 im Mantel 38 vorhanden sein. In anderen Ausführungsformen der Erfindung kann der Mantel 38 entfallen, wenn der Kern 39 von einem Medium mit niedrigerem Brechungsindex umgeben ist, beispielsweise einer Gasatmosphäre.

Der Lichtwellenleiter 3 kann beispielsweise aus Glas oder Quarz bestehen. Brechungsindexunterschiede zwischen dem Mantel 38 und dem Kern 39 können beispielsweise durch Dotierung des Kerns realisiert werden. In anderen Ausführungsformen der Erfindung kann der Lichtwellenleiter 3 ein Polymer enthalten oder daraus bestehen. Der Lichtwellenleiter 3 weist somit eine in etwa zylindrische Außenform mit vergleichsweise kleinem Durchmesser und vergleichsweise großer Länge auf.

Licht, welches in den Kern 39 eingekoppelt wird, wird an der Grenzfläche zum Mantel 38 totalreflektiert und propagiert daher entlang der Längsausdehnung des Lichtwellenleiters 3. Hierzu wird das Licht über die Stirnfläche 33 des Lichtwellenleiters 3 eingekoppelt. Da das Licht nur dann im Kern 39 propagiert, wenn der Grenzwinkel der Totalreflexion nicht überschritten wird, ergibt sich ein in etwa kegelförmiger Akzeptanzbereich 37 außerhalb des Lichtwellenleiters 3. Licht, welches außerhalb des Akzeptanzbereiches 37 auf den Lichtwellenleiter 3 einstrahlt, wird nicht in den Kern 39 eingekoppelt und propagiert dementsprechend auch nicht im Lichtwellenleiter 3.

Figur 1 zeigt weiterhin ein optoelektronisches Bauelement 2. Dieses kann beispielsweise eine Leuchtdiode, eine Superlumineszenzdiode oder ein Halbleiterlaser sein bzw. solche enthalten. In diesem Fall emittiert das optoelektronische Bauelement 2 Licht, welches zumindest teilweise in den Akzeptanzbereich 37 des Lichtwellenleiters 3 fällt und damit in den Kern 39 eingekoppelt wird.

Sofern das optoelektronische Bauelement 2 ein Photoempfänger ist, beispielsweise eine Photodiode, ein Photodiodenarray oder eine CCD-Zeile, wird im Kern 39 propagierendes Licht vom Lichtwellenleiter 3 in den Emittanzbereich 37 übertragen und von dort zumindest teilweise in das optoelektronische Bauelement 2 eingekoppelt. Zwingend erforderlich ist jedoch gemäß dem Stand der Technik stets, dass das optoelektronische Bauelement 2 zumindest teilweise mit dem Akzeptanz- bzw. Emittanzbereich 37 in direkter Sichtverbindung steht.

Figur 2 zeigt das Zusammenwirken eines optoelektronischen Bauelementes 2 mit einem Lichtwellenleiter 3 gemäß der vorliegenden Erfindung. Aus Vereinfachungsgründen ist in Figur 2 nur der Kern eines Lichtwellenleiters 3 dargestellt. Dies schließt die Anwesenheit eines den Kern umgebenden Mantels nicht aus.

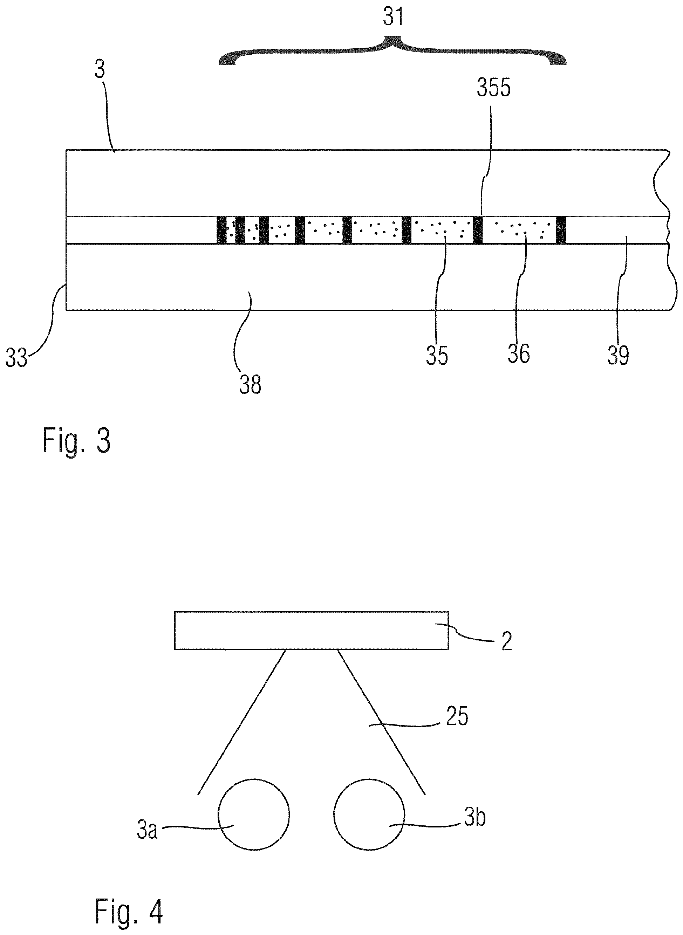

In zumindest einem ersten Längsabschnitt 31 des Lichtwellenleiters 3 ist ein Bragg-Gitter 35 angeordnet. Der Aufbau des Bragg-Gitters 35 wird nachfolgend anhand von Figur 3 näher erläutert. Das Bragg-Gitter 35 weist eine entlang seiner Längsausdehnung variable Gitterkonstante auf, d. h. an einem ersten Ende 351 weist das Bragg-Gitter 35 eine erste Gitterkonstante Λ₁ auf. An einem zweiten Ende 352 weist das Bragg-Gitter 35 eine zweite Gitterkonstante Λ₂ auf. Im dargestellten Ausführungsbeispiel ist die Gitterkonstante Λ₁ größer als die Gitterkonstante Λ₂. In anderen Ausführungsformen der Erfindung kann die Gitterkonstante am ersten Ende 351 auch kleiner sein als am zweiten Ende 352. Die Gitterkonstante verändert sich entlang der Längsausdehnung des Bragg-Gitters 35 linear, quadratisch, kubisch oder auch in einem anderen funktionalen Zusammenhang. Die Änderung der Gitterkonstanten entlang der Längsausdehnung des Bragg-Gitters 35 verläuft bevorzugt, aber nicht zwingend, stetig und/oder monoton.

Das Bragg-Gitter 35 hat die Wirkung, dass Licht einer von der Gitterkonstanten abhängigen Wellenlänge reflektiert wird, während Licht anderer Wellenlängen transmittiert wird. Zusätzlich tritt im ersten Längsabschnitt 31 Streuung auf, sodass Licht einer vorgebbaren Wellenlänge unter einem definierten, vom jeweiligen Ort innerhalb des ersten Längsabschnittes 31 abhängigen Winkel aus dem Wellenleiter 3 austritt. Sofern die Gitterkonstante entlang der Längsausdehnung des Bragg-Gitters so gewählt ist, dass Licht einer vorgebbaren Wellenlänge λₙ an einem ersten Ort 351 mit einer ersten Gitterkonstante Λ₁ des Bragg-Gitters 35 unter einem Winkel α₁ gestreut wird und an einem zweiten Ort 352 mit einer zweiten Gitterkonstante Λ₂ des Bragg-Gitters unter einem Winkel α₁' gestreut wird, kann dieses in einer Ebene 4 parallel zum Lichtwellenleiter 3 im Abstand d fokussiert abgebildet werden. Somit wird Licht einer ersten Wellenlänge λ₁ in einer ersten Teilfläche 21 des optoelektronischen Bauelementes 2 abgebildet und Licht einer zweiten, davon verschiedenen Wellenlänge λₙ wird in einer zweiten Teilfläche 22 des optoelektronischen Bauelementes 2 abgebildet. Optische Signale unterschiedlicher Wellenlänge werden somit auf unterschiedlichen Orten des optoelektronischen Bauelementes 2 abgebildet, sodass die erfindungsgemäße Vorrichtung beispielsweise als Demultiplexer verwendet werden kann. Hierzu kann das optoelektronische Bauelement 2 beispielsweise ein Photodiodenarray oder eine CCD-Zeile sein oder enthalten.

Da Lichtpfade prinzipiell umkehrbar sind, kann das optoelektronische Bauelement 2 auch ein Array von Laserdioden unterschiedlicher Wellenlänge sein bzw. solche enthalten oder aber eine Superlumineszenzdiode, welche Licht unterschiedlicher Wellenlänge aussendet oder auch ein Array von Superlumineszenzdioden. In all diesen Fällen wird Licht unterschiedlicher Wellenlänge von unterschiedlichen Teilflächen des optoelektronischen Bauelementes 2 emittiert und über den ersten Längsabschitt 31 des Lichtwellenleiters 3 mit dem Bragg-Gitter 35 in den Lichtwellenleiter 3 eingekoppelt. In diesem Fall kann die erfindungsgemäße Vorrichtung als Multiplexer bzw. als Einkoppelelement verwendet werden.

Figur 3 erläutert nochmals den erfindungsgemäßen Lichtwellenleiter 3 in einer Ausführungsform. Wie bereits vorstehend beschrieben, weist dieser einen Kern 39 und einen den Kern umgebenden Mantel 38 auf. In einem ersten Längsabschnitt 31 des Kerns 39 befindet sich zumindest ein Bragg-Gitter 35. Das Bragg-Gitter 35 enthält eine Mehrzahl von Raumbereichen 355, welche einen vom umgebenden Material des Kerns 39 verschiedenen Brechungsindex aufweisen. Solche Raumbereiche 355 können beispielsweise durch Punkt-zu-Punkt-Belichten mit einem Kurzpulslaser erhalten werden. Hierzu können Laserpulse mit einer Pulsdauer zwischen etwa 20 fs und etwa 200 fs sowie Pulsenergien zwischen 1 µJ und etwa 100 µJ bei einer Repetitionsrate zwischen etwa 10 Hertz und etwa 500 Hertz verwendet werden. In anderen Ausführungsformen der Erfindung, beispielsweise unter Verwendung von Polymerwellenleitern, können die Raumbereiche 355 auch mittels lithografischer Methoden eingebracht werden, beispielsweise durch direkt schreibende Lithografie oder durch Maskenlithografie. Der Abstand benachbarter Raumbereiche 355 definiert die Gitterkonstante des Bragg-Gitters 35, welche sich wie dargestellt entlang der Längsausdehnung und damit entlang des ersten Längsabschnittes 31 verändert.

Weiterhin sind zumindest im ersten Längsabschnitt 31 Streuzentren 36 angeordnet, welche das am Bragg-Gitter 35 zur Interferenz gebrachte Licht über die Mantelfläche des Lichtwellenleiters 3 seitlich aus dem Lichtwellenleiter 3 herausstreuen. Das optoelektronische Bauelement 3 befindet sich somit wie aus Figur 2 ersichtlich seitlich beabstandet vom Lichtwellenleiter 3 und damit außerhalb des direkten Akzeptanzbereichs 25 an der Stirnfläche 33 des Lichtwellenleiters 3.

Die Streuzentren 36 können beispielsweise durch Materialmodifikation mit einem Kurzpulslaser erzeugt oder in Form von Nanopartikeln eingebracht werden. Die Konzentration der Nanopartikel bzw. der Streuzentren liegt dabei zumindest im ersten Längsabschnitt 31 im Bereich von etwa 0,1 bis 5 Vol.-%. Die Streuzentren können einen Durchmesser zwischen etwa 10 nm und etwa 100 nm aufweisen.

Anhand von Figur 4 wird nochmals das Zusammenwirken eines optoelektronischen Bauelementes 2 mit zwei Wellenleitern 3a und 3b erläutert. Da das optoelektronische Bauelement 2 seitlich beabstandet zum Wellenleiter 3 angeordnet ist, kann dieses bei vergleichsweise großem Akzeptanz- bzw. Emittanzbereich 25 auch zwei Wellenleiter 3a und 3b gleichzeitig beleuchten bzw. Licht aus zwei Wellenleitern 3a und 3b empfangen. Da jeder Wellenleiter 3a und 3b zumindest ein Bragg-Gitter 35 enthält, wie vorstehend beschrieben, kann das von einem einzigen optoelektronischen Bauelement 2 ausgesandte Licht nachfolgend in beiden Wellenleitern propagieren. Auf diese Weise können zwei Lichtwellenleiter mit jeweils einer Mehrzahl faseroptischen Sensoren in einfacher Weise durch ein einziges optoelektronisches Bauelement mit einem optischen Abfragesignal versorgt werden.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Vorrichtung (1) mit zumindest einem optoelektronischen Bauelement (2) und zumindest einem Lichtwellenleiter (3), welche dazu eingerichtet ist, Licht zwischen dem optoelektronischen Bauelement (2) und dem Lichtwellenleiter (3) zu übertragen, wobei der Lichtwellenleiter (3) zumindest einen ersten Längsabschnitt (31) enthält, in welchen zumindest ein Bragg-Gitter (35) eingebracht ist, welches eine entlang seiner Längsausdehnung variable Gitterkonstante aufweist; und das optoelektronische Bauelement (2) seitlich beabstandet vom Lichtwellenleiter (3) angeordnet ist, wobei zumindest im ersten Längsabschnitt (31) weiterhin Streuzentren (36) angeordnet sind, **dadurch gekennzeichnet, dass** die Streuzentren (36) eine Konzentration von etwa 0,1% bis etwa 5% des mit den Streuzentren (36) versehenen Teilvolumens aufweisen.

2. Vorrichtung nach Anspruch 1, **dadurch gekennzeichnet, dass** die Streuzentren (36) durch lokale Modifikation des Materials des Lichtwellenleiters (3) und/oder durch Nanopartikel (37) gebildet werden.

3. Vorrichtung nach einem der Ansprüche 1 oder 2, **dadurch gekennzeichnet, dass** die Streuzentren (36) einen Durchmesser von etwa 10 nm bis etwa 100 nm oder von etwa 30 nm bis etwa 90 nm oder von etwa 40 nm bis etwa 80 nm aufweisen

4. Vorrichtung nach einem der Ansprüche 1 bis 3, **dadurch gekennzeichnet, dass** die Streuzentren (36) eine Konzentration von etwa 0,5 % bis etwa 3 % oder von etwa 0,8 % bis etwa 2,5 % des mit den Streuzentren versehenen Teilvolumens aufweisen.

5. Vorrichtung nach einem der Ansprüche 1 bis 4, **dadurch gekennzeichnet, dass** die Gitterkonstante entlang der Längsausdehnung des Bragg-Gitters (35) so verändert ist, dass Licht einer vorgebbaren Wellenlänge λₙ an einem ersten Ort (351) mit einer ersten Gitterkonstanten Λ₁ des Bragg-Gitters unter einem Winkel αₙ gestreut wird und an einem zweiten Ort (352) mit einer zweiten Gitterkonstanten Λ₂ des Bragg-Gitters unter einem Winkel αₙ' gestreut wird, so dass in einer Ebene (4) parallel zum Lichtwellenleiter (3) im Abstand d das Licht der Wellenlänge λₙ fokussiert abgebildet wird.

6. Vorrichtung nach Anspruch 5, **dadurch gekennzeichnet, dass** das optoelektronische Bauelement (2) aus einem der folgenden Elemente ausgewählt ist: einer Superlumineszenzdiode oder einer Photodiode oder einem CCD-Sensor oder einer Laserdiode.

7. Vorrichtung nach einem der Ansprüche 1 bis 6, weiterhin enthaltend eine Mehrzahl von Bragg-Gittern, welche dazu eingerichtet sind, mechanische Spannungen und/oder Längenänderung und/oder Temperatur zu erfassen.

8. Vorrichtung nach einem der Ansprüche 1 bis 7, **dadurch gekennzeichnet, dass** die Gitterkonstante A entlang der Längsausdehnung des Bragg-Gitters (35) einen linearen oder einen quadratischen oder einen kubischen Verlauf zeigt.

9. Verwendung einer Vorrichtung nach einem der Ansprüche 1 bis 8 als Multiplexer oder Demultiplexer oder Einkoppelelement.

10. Verfahren zum Übertragen von Licht zwischen zumindest einem optoelektronischen Bauelement (2) und zumindest einem Lichtwellenleiter (3), wobei der Lichtwellenleiter (3) zumindest einen ersten Längsabschnitt (31) enthält, in welchen zumindest ein Bragg-Gitter (35) eingebracht ist, welches eine entlang seiner Längsausdehnung variable Gitterkonstante aufweist; und das optoelektronische Bauelement (2) seitlich beabstandet vom Lichtwellenleiter angeordnet ist, wobei das Licht zumindest im ersten Längsabschnitt (31) an Streuzentren (36) gestreut wird, **dadurch gekennzeichnet, dass** die Streuzentren (36) in einer Konzentration von etwa 0,1 % bis etwa 5 % des mit den Streuzentren versehenen Teilvolumens vorhanden sind.

11. Verfahren nach Anspruch 10, **dadurch gekennzeichnet, dass** die Gitterkonstante entlang der Längsausdehnung des Bragg-Gitters (35) so verändert ist, dass Licht einer vorgebbaren Wellenlänge λₙ an einem ersten Ort (351) mit einer ersten Gitterkonstanten Λ₁ des Bragg-Gitters unter einem Winkel αₙ gestreut wird und an einem zweiten Ort (352) mit einer zweiten Gitterkonstanten Λ₂ des Bragg-Gitters unter einem Winkel αₙ' gestreut wird, so dass in einer Ebene (4) parallel zum Lichtwellenleiter (3) im Abstand d das Licht der Wellenlänge λₙ fokussiert abgebildet wird.

12. Verfahren nach einem der Ansprüche 10 oder 11, **dadurch gekennzeichnet, dass** durch Bragg-Gitter mechanische Spannungen und/oder Temperaturen gemessen werden.

13. Verfahren nach einem der Ansprüche 10 bis 12, **dadurch gekennzeichnet, dass** die Streuung im ersten Längsabschnitt (31) an Streuzentren (36) erfolgt, welche eine Konzentration von etwa 0,5 % bis etwa 3 % oder von etwa 0,8 % bis etwa 2,5 % aufweisen.

14. Verfahren nach einem der Ansprüche 10 bis 13, **dadurch gekennzeichnet, dass** die Streuung im ersten Längsabschnitt (31) an Streuzentren (36) erfolgt, welche durch lokale Modifikation des Materials des Lichtwellenleiters (3) und/oder durch Nanopartikel (37) gebildet werden.

15. Verfahren nach einem der Ansprüche 10 bis 14, **dadurch gekennzeichnet, dass** die Streuung im ersten Längsabschnitt (31) an Streuzentren (36) erfolgt, welche einen Durchmesser von etwa 10 nm bis etwa 100 nm oder von etwa 30 nm bis etwa 90 nm oder von etwa 40 nm bis etwa 80 nm aufweisen.

## Claims

1. Device (1) having at least one optoelectronic component (2) and at least one optical waveguide (3), which is designed to transfer light between the optoelectronic component (2) and the optical waveguide (3), the optical waveguide (3) containing at least one first longitudinal portion (31), into which at least one Bragg grating (35) is introduced, which has a grating constant that is variable along the longitudinal extent thereof; and the optoelectronic component (2) being arranged at a lateral distance from the optical waveguide (3), scattering centers (36) being also arranged at least in the first longitudinal portion (31), **characterized in that** the scattering centers (36) have a concentration of about 0.1 % to about 5 % of the partial volume provided with the scattering centers (36).

2. Device according to claim 1, **characterized in that** the scattering centers (36) are formed by local modification of the material of the optical waveguide (3) and/or by nanoparticles (37).

3. Device according to any one of claims 1 or 2, **characterized in that** the scattering centers (36) have a diameter of about 10 nm to about 100 nm or of about 30 nm to about 90 nm or of about 40 nm to about 80 nm.

4. Device according to any one of claims 1 to 3, **characterized in that** the scattering centers (36) have a concentration of about 0.5 % to about 3 % or of about 0.8 % to about 2.5 % of the partial volume provided with the scattering centers.

5. Device according to any one of claims 1 to 4, **characterized in that** the grating constant along the longitudinal extent of the Bragg grating (35) is changed in such a way that light of a predeterminable wavelength λₙ is scattered at a first location (351) with a first grating constant Λ₁ of the Bragg grating at an angle αₙ and is scattered at a second location (352) with a second grating constant Λ₂ of the Bragg grating at an angle αₙ', so that the light of wavelength λₙ is imaged in a focused manner in a plane (4) parallel to the optical waveguide (3) at a distance d.

6. Device according to claim 5, **characterized in that** the optoelectronic component (2) is selected from one of the following elements: a superluminescent diode or a photodiode and/or a CCD sensor or a laser diode.

7. Device according to any one of claims 1 to 6, further containing a plurality of Bragg gratings which are designed to detect mechanical stresses and/or a change in length and/or temperature.

8. Device according to any one of claims 1 to 7, **characterized in that** the grating constant Λ along the longitudinal extent of the Bragg grating (35) exhibits a linear or a square or a cubic shape.

9. Use of a device according to any one of claims 1 to 8 as a multiplexer or demultiplexer or coupling element.

10. Method for transferring light between at least one optoelectronic component (2) and at least one optical waveguide (3), the optical waveguide (3) containing at least one first longitudinal portion (31) into which at least one Bragg grating (35) is introduced, which has a grating constant that is variable along the longitudinal extent thereof; and the optoelectronic component (2) being arranged at a lateral distance from the optical waveguide, the light being scattered at least in the first longitudinal portion (31) at scattering centers, **characterized in that** the scattering centers (36) are present in a concentration of about 0.1 % to about 5 % of the partial volume provided with the scattering centers.

11. Method according to claim 10, **characterized in that** the grating constant along the longitudinal extent of the Bragg grating (35) is changed in such a way that light of a predeterminable wavelength λₙ is scattered at a first location (351) with a first grating constant Λ₁ of the Bragg grating at an angle αₙ and is scattered at a second location (352) with a second grating constant Λ₂ of the Bragg grating at an angle αₙ', so that the light of wavelength λₙ is imaged in a focused manner in a plane (4) parallel to the optical waveguide (3) at a distance d.

12. Method according to any one of claims 10 or 11, **characterized in that** mechanical stresses and/or temperatures are measured by Bragg gratings.

13. Method according to any one of claims 10 to 12, **characterized in that** the scattering is made in the first longitudinal portion (31) at scattering centers (36) which have a concentration of about 0.5 % to about 3 % or of about 0.8 % to about 2.5 %.

14. Method according to any one of claims 10 to 13, **characterized in that** the scattering is made in the first longitudinal portion (31) at scattering centers (36) which are formed by local modification of the material of the optical waveguide (3) and/or by nanoparticles (37).

15. Method according to any one of claims 10 to 14, **characterized in that** the scattering is made in the first longitudinal portion (31) at scattering centers (36) which have a diameter of about 10 nm to about 100 nm or of about 30 nm to about 90 nm or of about 40 nm to about 80 nm.

## Revendications

1. Dispositif (1) comprenant au moins un composant optoélectronique (2) et au moins un guide d'ondes optique (3), le dispositif étant conçu pour transmettre de la lumière entre le composant optoélectronique (2) et le guide d'ondes optique (3),
dans lequel
le guide d'ondes optique (3) comprend au moins une première portion longitudinale (31) dans laquelle est incorporé au moins un réseau de Bragg (35) qui présente une constante de réseau variable le long de son extension longitudinale ; et
le composant optoélectronique (2) est disposé latéralement à distance du guide d'ondes optique (3),
en outre, des centres de diffusion (36) sont disposés au moins dans la première portion longitudinale (31),
**caractérisé en ce que**
les centres de diffusion (36) ont une concentration d'environ 0,1 % à environ 5 % du volume partiel pourvu des centres de diffusion (36).

2. Dispositif selon la revendication 1,
**caractérisé en ce que** les centres de diffusion (36) sont formés par modification locale du matériau du guide d'ondes optique (3) et/ou par des nanoparticules (37).

3. Dispositif selon l'une des revendications 1 ou 2,
**caractérisé en ce que** les centres de diffusion (36) ont un diamètre d'environ 10 nm à environ 100 nm, ou d'environ 30 nm à environ 90 nm, ou d'environ 40 nm à environ 80 nm.

4. Dispositif selon l'une des revendications 1 à 3,
**caractérisé en ce que** les centres de diffusion (36) ont une concentration d'environ 0,5 % à environ 3 %, ou d'environ 0,8 % à environ 2,5 % du volume partiel pourvu des centres de diffusion.

5. Dispositif selon l'une des revendications 1 à 4,
**caractérisé en ce que** la constante de réseau est modifiée le long de l'extension longitudinale du réseau de Bragg (35) de telle sorte que la lumière d'une longueur d'onde prédéfinissable λₙ soit diffusée selon un angle αₙ en un premier point (351) avec une première constante de réseau Λ₁ du réseau de Bragg et selon un angle αₙ' en un deuxième point (352) avec une deuxième constante de réseau Λ₂ du réseau de Bragg, de sorte que la lumière de la longueur d'onde λₙ soit représentée en étant focalisée dans un plan (4) parallèle au guide d'ondes optique (3) à une distance d.

6. Dispositif selon la revendication 5,
**caractérisé en ce que** le composant optoélectronique (2) est choisi parmi l'un des éléments suivants : une diode superluminescente ou une photodiode ou un capteur CCD ou une diode laser.

7. Dispositif selon l'une des revendications 1 à 6,
comprenant en outre une pluralité de réseaux de Bragg conçus pour détecter des contraintes mécaniques et/ou une variation de longueur et/ou une température.

8. Dispositif selon l'une des revendications 1 à 7,
**caractérisé en ce que** la constante de réseau A présente une courbe linéaire ou quadratique ou cubique le long de l'extension longitudinale du réseau de Bragg (35).

9. Utilisation d'un dispositif selon l'une des revendications 1 à 8 comme multiplexeur ou démultiplexeur ou élément de couplage.

10. Procédé de transmission de lumière entre au moins un composant optoélectronique (2) et au moins un guide d'ondes optique (3),
dans lequel
le guide d'ondes optique (3) comprend au moins une première portion longitudinale (31) dans laquelle est incorporé au moins un réseau de Bragg (35) qui présente une constante de réseau variable le long de son extension longitudinale ; et
le composant optoélectronique (2) est disposé latéralement à distance du guide d'ondes optique (3),
la lumière est diffusée au niveau de centres de diffusion (36), au moins dans la première portion longitudinale (31),
**caractérisé en ce que**
les centres de diffusion (36) se présentent en une concentration d'environ 0,1 % à environ 5 % du volume partiel pourvu des centres de diffusion.

11. Procédé selon la revendication 10,
**caractérisé en ce que** la constante de réseau est modifiée le long de l'extension longitudinale du réseau de Bragg (35) de telle sorte que la lumière d'une longueur d'onde prédéfinissable λₙ soit diffusée selon un angle αₙ en un premier point (351) avec une première constante de réseau Λ₁ du réseau de Bragg et selon un angle αₙ' en un deuxième point (352) avec une deuxième constante de réseau Λ₂ du réseau de Bragg, de sorte que la lumière de la longueur d'onde λₙ soit représentée en étant focalisée dans un plan (4) parallèle au guide d'ondes optique (3) à une distance d.

12. Procédé selon l'une des revendications 10 ou 11,
**caractérisé en ce que** les contraintes mécaniques et/ou les températures sont mesurées par des réseaux de Bragg.

13. Procédé selon l'une des revendications 10 à 12,
**caractérisé en ce que** la diffusion s'effectue dans la première portion longitudinale (31) au niveau de centres de diffusion (36) qui ont une concentration d'environ 0,5 % à environ 3 %, ou d'environ 0,8 % à environ 2,5 %.

14. Procédé selon l'une des revendications 10 à 13,
**caractérisé en ce que** la diffusion s'effectue dans la première portion longitudinale (31) au niveau de centres de diffusion (36) qui sont formés par modification locale du matériau du guide d'ondes optique (3) et/ou par des nanoparticules (37).

15. Procédé selon l'une des revendications 10 à 14,
**caractérisé en ce que** la diffusion s'effectue dans la première portion longitudinale (31) au niveau de centres de diffusion (36) qui ont un diamètre d'environ 10 nm à environ 100 nm, ou d'environ 30 nm à environ 90 nm, ou d'environ 40 nm à environ 80 nm.
